(19) 

Europäisches
Patentamt
European
Patent Office
Office européen
des brevets

(11) **EP 1 806 752 A1**

(12) **EUROPEAN PATENT APPLICATION**
published in accordance with Art. 158(3) EPC

(43) Date of publication:
**11.07.2007 Bulletin 2007/28**

(51) Int Cl.:
***G21B 1/00*** *(2006.01)*

(21) Application number: **05799206.7**

(22) Date of filing: **24.10.2005**

(86) International application number:
**PCT/JP2005/019851**

(87) International publication number:
**WO 2006/046680 (04.05.2006 Gazette 2006/18)**

(84) Designated Contracting States:
**DE FR GB SE**

(30) Priority: **25.10.2004 JP 2004309176**

(71) Applicants:
• **Ikegami, Sayaka**
**Takarazuka-shi, Hyogo 665-0805 (JP)**
• **Yougen Kaisha Rine**
**Takarazuka-shi, Hyogo 665-0805 (JP)**
• **Sakaguchi Dennetsu Kabushiki Kaisha**
**Takarazuka-shi, Hyogo  665-0805 (JP)**
• **IKEGAMI, Hidetsugu**
**Takarazuka-shi, Hyogo 665-0805 (JP)**

(72) Inventors:
• **Ikegami, Sayaka**
**Takarazuka-shi, Hyogo 665-0805 (JP)**
• **Yougen Kaisha Rine**
**Takarazuka-shi, Hyogo 665-0805 (JP)**
• **Sakaguchi Dennetsu Kabushiki Kaisha**
**Takarazuka-shi, Hyogo  665-0805 (JP)**
• **IKEGAMI, Hidetsugu**
**Takarazuka-shi, Hyogo 665-0805 (JP)**

(74) Representative: **Kronthaler, Wolfgang N.K.**
**Kronthaler, Schmidt & Coll.,**
**Steinsdorfstrasse 5**
**80538 München (DE)**

(54) **MOLECULE CHEMISTRY NUCLEAR FUSION REACTION GENERATION METHOD AND MOLECULE CHEMISTRY NUCLEAR FUSION ENERGY GENERATOR**

(57)    In a chemonuclear fusion in which hydrogen ions of nuclear stopping power energy of a few keV per nucleon, that is, deuteron or proton beam are implanted into a liquid target of molten metal lithium, the reaction rate is increased by about $10^{11}$ times by thermodynamic force in the liquid. For putting chemical nuclear fusion to practical use, there is needed to increase the reaction rate by further increasing the thermodynamic force.

In the present invention, in order to enhance the thermodynamic force, molecule ions or ion clusters of hydrogen, helium, lithium, helium hydride, lithium hydride, boron or the like withdrawn from an ion source ( 3 ) or produced by discharge within a reaction vessel ( 8 ) are accelerated to implant the molecule ions or ion clusters into the surface of a liquid target ( 4 ) such as molten metal lithium or lithium alloy, whereby a chemonuclear fusion reaction, which synergistically enhances and increases the thermodynamic force which acts on constituent atoms of molecule ions within the liquid target, is induced.

**FIG. 1**

**Description**

Technical Field

The present invention relates to a chemonuclear fusion reaction generating method and a chemonuclear fusion energy generating apparatus, and more particularly, relates to a chemonuclear fusion reaction generating method and a chemonuclear fusion energy generating apparatus utilizing a chemonuclear fusion and secondary nuclear reaction obtained by implanting molecule ions or ion clusters into a liquid target of nuclear fusion materials consisting mainly of molten metal lithium.

Background Art

Hitherto, no practically usable nuclear fusion has been obtained. Inventions shown in the Japanese Patent Application Laid-Open Nos. 270372/2003 (recoilless nonthermal nuclear fusion reaction generating method and recoilless nonthermal nuclear fusion energy generating apparatus), 207092/2002 (method of generating molten lithium nuclear fusion reaction and apparatus for supplying nuclear fusion energy), 066176/2003 (method of generating nonthermal nuclear fusion electric energy and apparatus for generating nonthermal nuclear fusion electric energy), 130976/2003 (apparatus for nuclear fusion reaction), and 130977/2003 (method of generating molten lithium nuclear fusion reaction and apparatus for generating molten lithium nuclear fusion energy), and the Japanese Patent Application No. 282261/2003 (method of generating enhanced nuclear fusion energy and apparatus for generating enhanced nuclear fusion energy) have been proposed by the inventors of this patent application.

The theory based on the second law of the thermodynamics and experimental evidences are disclosed in the non patent material 1 (Japanese Journal of Applied Physics 40, 6092 (2001) by Ikegami Hidetsugu), non patent material 2 ( Bulletin of Institute of Chemistry, Uppsala University, September 2002, by Ikegami Hidetsugu et al., http://www.inst.kemi.uu.se/Bulletin/Bulletinen_I.pdf ) and non patent material 3 ( Progress of Theoretical Physics Supplement 154,251 ( 2004 ), by Ikegami Hidetsugu et al.

Said prior inventions disclose the possibility of nonthermal nuclear fusion which can be practically used by using publicly known structures and the experimentally evidences of the energy generating apparatus utilized the above theory.

Further, a lithium chemical nuclear fusion reaction as an actual energy generating method by the chemonuclear fusion reaction has been invented as shown in the Japanese Patent Application No. 165107/2004, and the utility has been certified by the experimental tests.

DISCLOSURE OF THE INVENTION

There are tasks which must be solved in order to realize the above-mentioned inventions.

In said prior inventions, a nuclear fusion method based on a new theory called as a chemonuclear fusion reaction is disclosed.

In said method, deuteron or proton beam of nuclear stopping power energy of a few keV ( kiro electron volt ) per nucleon is implanted into a liquid target consisting mainly of molten metal lithium and the nuclear fusion reaction rate is increased by about $10^{11}$ times by the thermodynamic force in the liquid. However, it is necessary to increase remarkably the nuclear fusion reaction rate by further increasing the thermodynamic force acting on atomic ions in the liquid.

The thermodynamic force herein called means an ensemble phenomenon specific to the reaction medium actualized by the effect of the elongation of the absorption period of time or the increasing effect of the spontaneous chemical reaction in the liquid.

The implanted ions incident with atoms in the liquid target and form fusion atoms at the incident points. In the fusion atoms, each incident atomic nucleus is confined in a minimum space in the range of pm ($10^{-12}$m), and the reciprocal action of supper high density is generated. The natural duration of the formation of the fusion atoms is prolonged by the vast promotion factor explained hereinafter in case that the chemical energy (Gibbs energy) emitted in the atomic reaction for forming fusion atoms is large. As a result, the confined time of the reciprocally acted atomic nucleus is prolonged, so that the nuclear fusion reaction rate is also increased.

According to the chemonuclear fusion of the above mechanism, the nuclear fusion of supper high density million times larger than the thermal nuclear fusion plasma in the sun can be realized on the ground.

An object of the present invention, accordingly, is to provide a new chemonuclear fusion reaction generating method and a chemonuclear fusion energy generating apparatus, wherein a plurality of chemonuclear fusion reactions are generated synergistically.

The above object of the present invention can be attained by accelerating molecule ions or ion clusters of hydrogen, or deuterium ( called as hydrogen hereinafter except the case specified especially), helium, lithium, helium hydride, lithium hydride, boron or the like withdrawn from an ion source or produced by discharge within a reaction vessel, and implanting the molecule ions or ion clusters into the surface of a liquid target such as molten metal lithium or lithium alloy, whereby a chemonuclear fusion reaction, which synergistically enhances and increases the thermodynamic force which acts on constituent atoms of molecule ions in the liquid metal lithium, a secondary nuclear reaction generated by a low speed neutron emitted in the nuclear fusion is increased indirectly, and a difference between Gibbs energies (chemical potentials) of before and after the nuclear fusion reaction is made large by mixing the metallic nuclear fusion materials into the liquid target in order to enhance further the reaction.

The present invention is characterized by comprising means for generating positive or negative molecule ions, a liquid target of liquid nuclear fusion materials consisting of a molten metal lithium, or metal lithium alloy or the like, and a reaction vessel for said liquid target, the inner surface of said reaction vessel being coated with gamma ray screen materials and a neutron absorber such as metal lithium or boron, or compound of lithium or boron, wherein a chemonuclear fusion reaction is increased by the thermodynamic force within the liquid target, so that a secondary nuclear reaction induced by a low speed neutron emitted in the nuclear fusion and by the neutron absorber of the metal lithium or lithium alloy on the inner surface of the reaction vessel is increased.

According to the present invention, accelerated molecule ions can be reacted to the liquid target consisting of the nuclear fusion materials of molten metal lithium, or lithium alloy or the like in vacuum of clean because the subject of the nuclear fusion reaction is metal lithium and molecule ions which can hardly react chemically to lithium, so that the chemonuclear fusion reaction can be enhanced by the thermodynamic force in the liquid. Accordingly, the energy can be supplied stably with safe and the handling thereof is simple and easy.

The chemonuclear fusion reaction is not reported theoretically and / or experimentally before the report of the non patent material 1, other than the similar nuclear fusion generated in the White Dwarfs of ultra dense disclosed in the non patent material 4 (North-Holland, Amsterdam, 1958) by E. Schatzman.

The chemonuclear fusion of the present invention in the chemical nuclear fusion reaction will be explained starting from Equation (1).

$$^{7}Li + {}^{7}Li \rightarrow {}^{14}C^{*} \rightarrow {}^{10}Be^{*} + {}^{4}He \rightarrow$$

$$3\,{}^{4}He + 2n + 6.40MeV \qquad (1)$$

Here, $^{14}C^{*}$ and $^{10}Be^{*}$ are excitation nuclears of intermediate reaction state and n is a low speed neutron.

Further, 6.40 Me Visa reaction generation energy and M e V is a million electron volt.

Almost all of the generated energy in this case is emitted in the form of kinetic energy of formed atom $^{4}$He or alpha ray.

In this reaction, the reaction probability is $6 \times 10^{-63}$ which is too small to observe, in case that $^{7}$Li ion energy is 30 keV ( kiro electron volt). However, in this energy region, an atomic conversion reaction shown in Equation ( 2 ) is generated following the nuclear fusion reaction shown in the Equation (1).

$$Li + Li \rightarrow C \qquad (2)$$

Accordingly, a vast reaction rate promotion factor shown in Equation ( 3 ) due to the Gibbs energy change $\Delta Gr$ (Li + Li) in the atomic conversion reaction shown in the Equation ( 2 ) and the thermodynamic force determined by the liquid target temperature T is generated in the reaction rate of the nuclear fusion reaction with the molten metal lithium shown in the Equation (1).

$$exp\,[-\Delta Gr\,(Li + Li)\,/k_{B}T] \qquad (3)$$

Here, $k_{B}$ is Boltzmann constant, and Gibbs energy change $\Delta Gr$ (Li + Li) in the atomic conversion reaction shown in the Equation (2 ) can be calculated by formed energies G f of each of the lithium and carbon as shown in Equation (4).

$$\Delta G r \ (L i + L i) = \Delta G f \ (C)$$

$$-2 \Delta G f \ (L i) \doteqdot -4.4 e V \qquad (4)$$

For example, the value of the promotion factor shown in the Equation (3) reaches to $10^{48}$ at $k_B T = 0.0396eV$ in case that the absolute temperature T is 460K (kelvin), for example .

Accordingly, the nuclear fusion reaction shown in the Equation (1) is generated at a rate larger remarkably than said reaction probability through the atomic conversion reaction shown in the Equation (2).

In fact, the reaction rate promotion of $10^{57}$ times larger can be measured by the specter observation of helium ion emitted in the reaction shown in the Japanese Patent Application No. 16507/2004, so that the effectiveness of the principle of the lithium chemonuclear fusion reaction corresponding to the reaction shown in the Equation (1) is validated.

The chemonuclear fusion reaction of the deuterium burning is shown in Equation (5).

$$^7L i \ + \ ^2H \rightarrow \ ^8B e * + n \rightarrow 2 \cdot ^4H e + n$$

$$+ 1 5.1 2 M e V \qquad (5)$$

Almost all of the generated energy in this case is emitted in the form of kinetic energy of formed atom $^4$He or alpha ray.

In this reaction, an atomic conversion reaction shown in Equation (6) is generated as chain reaction in case that the deuterium ion has the nuclear stopping power energy.

$$L i + \ ^2H \rightarrow \ B e \qquad (6)$$

Accordingly, a reaction rate promotion factor shown in Equation (7) due to the Gibbs energy change $\Delta G r \doteqdot$ - 0.9 9 e V in the atomic conversion reaction shown in the Equation ( 6 ) and the thermodynamic force determined by the liquid target temperature T is generated in the reaction rate of the nuclear fusion reaction with the molten metal lithium shown in the Equation (5).

$$e x p \ [- \Delta G r \ (L i + ^2H) \ / k_B T] \qquad (7)$$

For example, the value of the promotion factor shown in the Equation ( 7 ) becomes about $10^{11}$ times larger in case that the melting point T of the metal lithium is 460 K, for example.

In fact, an observed value larger than that has been reported in the non patent materials 2 and 3.

However, it is necessary to promote the reaction rate by million times or more in order to use practically the nuclear fusion reaction due to the hydrogen burning. According to the chemonuclear fusion reaction of the present invention, such promotion can be realized, and it is explained with reference to the combination of the atomic reactions shown in the Equations ( 2 ) and ( 6 ).

In case that lithium hydride molecules or clusters (L i $^2$H)$_n$ are implanted into the liquid lithium target as ions, the atomic conversion reactions of n numbers shown in the Equations ( 2 ) and ( 6 ) are effected synergistically in the same phase. In such a more simple case that n is 1 and molecule L i $^2$H of two atoms are considered, a molecule conversion reaction shown in Equations (8) is generated.

$$L i ^2H + 2 L i \rightarrow B e C \qquad (8)$$

Such phenomenon that a plurality of atoms are reacted in the same phase can be understood from the non-liner effect of the coherent spattering generated by the implant of the molecule ions having nuclear stopping power energy reported in the non patent material 5 (Journal of Applied Physics 45,953 (1974) by H. Andersen et al.)

The Gibbs energy change $\Delta G r ( L i\ ^2H + 2 L i )$ in the reactions of the same phase is equal to about algebraic sum of Gibbs energy change $\Delta G r (Li+^2H)$ and $\Delta G r (Li+Li)$ of each of the Equations ( 2 ) and ( 6 ), so that the reaction promotion factor shown in the Equations ( 8 ) becomes to Equation ( 9 ), and becomes to a value which is a product of the promotion factors derived from the Equations (3), (4) and ( 7 ) and is a value of about $10^{60}$ times larger.

$$\exp \{[-\Delta G r\ (L i +^2H) - \Delta G r\ (L i + L i)] / K_B T\} \qquad (9)$$

The nuclear reaction probability shown in the Equation ( 5 ) is about $10^{-35}$ in case of the deuterium in the $L i\ ^2H$ ions having the accelerate energy of 20 k e V , for example, so that all deuterium in the implanted ions are burned by the nuclear reaction shown in the Equation ( 5 ) due to the promotion factor of $10^{60}$ times larger. Further, the lithium atoms of a part of ions are not reacted as shown in the Equation ( 1 ), and dissolved as it is in the liquid lithium target.

Such the most simple case that ions of lithium molecule $Li_2$ as molecule ions of a plurality of ions of simple element are implanted into liquid lithium target will be explained. In this case, molecule conversion reaction shown in Equation ( 10 ) is generated.

$$L i_2 + 2 L i \rightarrow C_2 \qquad (10)$$

Gibbs energy change of this reaction is expressed by Equation (11).

$$\Delta G r\ (L i_2 + 2 L i) = 2 \Delta G r\ (L i + L i) + \Delta G_f\ (C_2) - \Delta G_f\ (L i_2) \qquad (11)$$

The value shown in the Equation ( 11 ) becomes large remarkably as shown in Equation ( 12 ), because $C_2$ molecule is a unit cell component of diamond, and formed energy $\Delta G_i (C_2)$ is larger than the value of formed energy $\Delta G_i (L i_2)$ of $L i_2$ molecule.

$$\Delta G r\ (L i_2 + 2 L i) < -8 . 8 e V \qquad (12)$$

The small value of the reaction probability shown in the Equation (1) can set off, because the reaction rate promotion factor becomes larger by $10^{96}$ times or more. Accordingly, all implanted $Li_2$ molecule ions create nuclear fusion reaction.

The chemonuclear fusion reaction of the present invention has been validated. The observed value of $10^{57}$ times of the nuclear reaction rate promotion shown in the Equation ( 1 ) disclosed in the Japanese Patent Application No. 165107/2004 is one thousand million times larger than a value of the promotion of $10^{48}$ times calculated by the Equation (4).

Such large difference is realized only when almost all molecule ions of 0.1 % mixed with lithium ion beam create the chemonuclear fusion reaction by the molecule conversion shown in the Equation ( 10 ).

Finally, chemonuclear fusion reaction of the most important to practical use due to $^2HH e\ ^+$ which is two atoms molecule ions in $^2HH e\ ^+$ and $^2H_2H e\ ^{++}$ of deuteride helium ions will be explained.

Deuteride helium ion is generated under the discharge in the mixed gas of the deuterium gas and helium gas, or when helium ions are passed through deuterium gas or when deuterium ions are passed through helium gas. Molecule conversion reaction shown in Equation (13) is generated by a reaction rate which overcome the all competition chemical reactions, when deuteride helium ions are implanted into the liquid lithium target.

$$^2HHe + 2Li \rightarrow BeB \qquad (13)$$

Namely, Gibbs energy change of this reaction is shown in Equation (14).

$$\Delta Gr\ (^2HHe + 2Li) = \Delta Gr\ (^2H + Li)$$

$$+ \Delta Gr\ (He + Li) \fallingdotseq -5.11eV \qquad (14)$$

All deuteride atoms in the implanted ions create nuclear fusion reaction shown in the Equation (5), even if $^2HH$e ion energy is about 10 keV, because the reaction promotion factor becomes $10^{56}$ times.

At this ion energy, a part of helium atoms which are a partner of the deuteride atoms is changed to boron by the nuclear fusion reaction, but the reminder thereof is still remain as helium and serves as a catalyst for the deuterium plus lithium chemonuclear fusion reaction.

Beryllium and boron which are products of the chemnuclear fusion reaction generated by the promoting action due to the reaction shown in the Equation ( 13 ) are dissolved as a dilute alloy in the molten lithium, and chemonuclear fusion reaction accompanied with the molecule conversion shown in Equations ( 15 ), ( 16 ) and ( 17 ) with deuteride helium ions.

$$^2HHe + LiBe \rightarrow BeC \qquad (15)$$

$$^2HHe + LiBe \rightarrow B_2 \qquad (16)$$

$$^2HHe + BeB \rightarrow C_2 \qquad (17)$$

The promotion factors of reactions of the Equations (15), (16) and ( 17 ) are $3 \times 10^{54}$ , $1 \times 10^{64}$, $1 \times 10^{53}$ , respectively, and nuclear fusion reactions due to deuteride and helium shown Equations ( 18 ), ( 19 ), ( 20 ), ( 21 ) and ( 22 ) are generated.

$$^2H + {}^{10}B \rightarrow {}^{12}C^* \rightarrow 3 \cdot {}^4He$$

$$+ 17.91MeV \qquad (18)$$

$$^2H + {}^{11}B \rightarrow {}^{13}C^* \rightarrow {}^9Be + {}^4He$$

$$+ 8.03MeV \qquad (19)$$

$$^4He + {}^6Li \rightarrow {}^{10}B + \gamma + 4.46MeV \qquad (20)$$

$$^4He + {}^7Li \rightarrow {}^{11}B + \gamma + 8.67MeV \qquad (21)$$

$$^4\mathrm{He} + {}^9\mathrm{Be} \;\rightarrow\; {}^{12}\mathrm{C} + \mathrm{n} + \gamma$$

$$+5.70\mathrm{MeV} \hspace{4cm} (22)$$

Here, γ is gamma ray. Beryllium and boron generated in the nuclear fusion reactions are finally become carbon. A controllable nuclear energy is generated by said series of nuclear fusion reactions.

BRIEF DESCRIPTION OF THE DRAWING

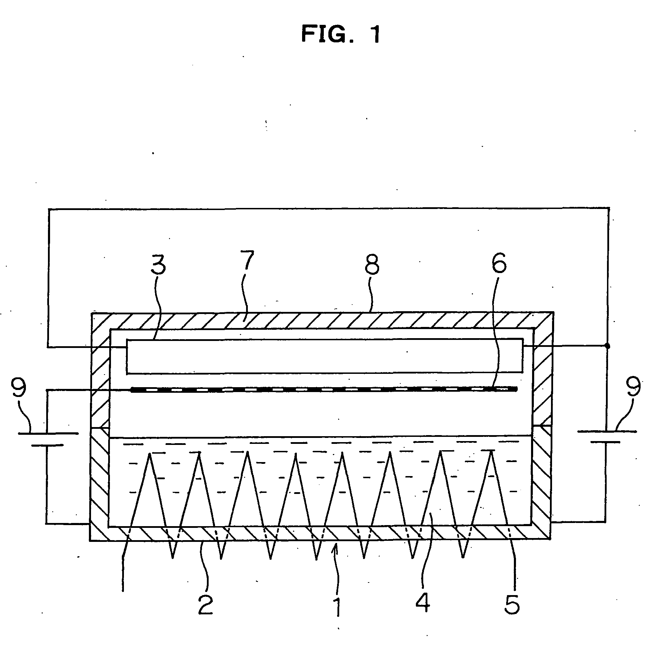

FIG. 1 shows a schematic view of a reaction device of a chemonuctear fusion energy generating apparatus according to the present invention.

BEST MODE OF EMBODIMENT OF THE INVENTION

An embodiment of the present invention will be explained with reference to the drawing.

The chemounclear fusion energy generating apparatus of the present invention comprises basically a reaction vessel and a circulating and purifying system of nuclear fusion materials such as lithium or the like, a collecting system for collecting helium formed in the nuclear fusion, a cooling system, a heat insulator, a heat exchanging system, and a shielding member for shielding radiation rays such as neutron, gamma ray, beat ray or the like, similar to that disclosed in the Japanese Patent Application Laid-Open No. 270372/2003.

The modes of the chemonuclear fusion reaction generating method and the chemonuclear fusion energy generating apparatus according to the present invention will be explained.

In FIG. 1, reference numeral 1 denotes a reaction device of a chemonuclear fusion energy generating apparatus according to the present invention, comprising a molten metal lithium container 2, a molecule ion source 3, molten lithium or lithium ally 4, a thermo-couple array 5, an ion accelerating electrode 6, an insulating member 7, a reaction vessel 8, and a high voltage power supply. Further, a molten metal lithium heating system is provided. The detailed structures of the heating system and the thermo-couple array 5 are omitted.

The molecule ion source 3 is composed of integration of an ion source utilizing discharge, surface electrolytic dissociation, photoelectric effect, and spattering etc. The molecule ions withdrawn from the molecule ion source 3 are accelerated to a predetermined energy by the accelerating electrode 6, and implanted into the target of molten metal lithium or lithium alloy 4 without disturbing the atom state of the lithium. As a result, almost all implanted molecule ions induce nuclear fusion reaction on the surface layer of the molten metal lithium by the thermodynamic force, so that gamma ray, beta ray, alpha ray of the secondary nuclear reaction due to the low speed neutron in addition to helium ion of emitted energy of several M e V are generated.

The generated energy is taken out through the thermo-couple array 5 or the coolant for cooling the reaction device.

In the primary nuclear fusion reaction of the present invention, main reaction product is helium, so that it is taken out by the helium collection system and utilize effectively. A part of the helium can be used as a fuel or catalyst for the chemonuclear fusion reaction, so that no radioactive waste is produced.

Possibility or Utilization in Industry

According to the present invention, molecule ions can be introduced to the target of metal lithium in the vacuum of clean, so that the beam strength can be controlled freely as like as the acceleration energy by the adjustment of the voltage applied to the ion source.

As a result, the optimum quantity of energy can be obtained according to the object such as generation of electrical energy or district heating, or the like by the method and apparatus disclosed in the Japanese Patent Application Laid-Open No. 270372/2003, for example, and an energy source, which is stable and safety with small limitation in utilization can be provided.

Claims

1.  A chemonuclear fusion reaction generating method, wherein molecule ions withdrawn from an ion source or produced by discharge within a reaction vessel are accelerated to implant the molecule ions into a liquid target of nuclear fusion materials consisting mainly of molten metal lithium, whereby a chemonuclear fusion reaction is induced by the thermodynamic force within the liquid target.

2. A chemonuclear fusion reaction generating method, wherein molecule ions produced by discharge within a reaction vessel are accelerated to implant the molecule ions into a liquid target of nuclear fusion materials consisting mainly of molten metal lithium, the inner surface of the reaction vessel being coated with a neutron absorber such as metal lithium or boron, or a compound of lithium or boron, whereby a chemonuclear fusion reaction is induced by the thermodynamic force within the liquid target, and a secondary nuclear reaction is induced in the neutron absorber by a low speed neutron emitted in the nuclear fusion.

3. A chemonuclear fusion reaction generating method, wherein molecule ions produced by discharge within a reaction vessel are accelerated to implant the molecule ions into a liquid target of nuclear fusion materials consisting mainly of molten metal lithium, the inner surface of the reaction vessel being coated with gamma ray screen materials and a neutron absorber such as metal lithium or boron, or a compound of lithium or boron, whereby a chemonuclear fusion reaction is induced by the thermodynamic force within the liquid target, and a secondary nuclear reaction is induced in the neutron absorber by a low speed neutron emitted in the nuclear fusion.

4. A chemonuclear fusion reaction generating method, as claimed in claim 1, 2 or 3, wherein chemonuclear fusion reaction inducing materials other than the metal lithium are mixed with said nuclear fusion materials.

5. A chemonuclear fusion reaction generating method as claimed in claim 1, 2, 3 or 4, wherein a material for controlling the target temperature is mixed with said nuclear fusion materials.

6. A chemonuclear fusion energy generating apparatus comprising a molecule ion source for generating positive or negative ions, a liquid target of nuclear fusion materials consisting mainly of a molten metal lithium, a reaction vessel for said liquid target, the inner surface of said reaction vessel being coated with a neutron absorber such as metal lithium or boron, or a compound of lithium or boron, and means for accelerating the ions and implanting the ions into the liquid target, wherein a chemonuclear fusion reaction is induced by the thermodynamic force within the liquid target, so that a secondary nuclear reaction is induced in the neutron absorber by a low speed neutron emitted in the nuclear fusion.

7. A chemonuclear fusion energy generating apparatus comprising a molecule ion source for generating positive or negative ions, a liquid target of nuclear fusion materials consisting mainly of a molten metal lithium, a reaction vessel for said liquid target, the inner surface of said reaction vessel being coated with gamma ray screen materials and a neutron absorber such as metal lithium or boron, or a compound of lithium or boron, and means for accelerating the ions and implanting the ions into the liquid target, wherein a chemonuclear fusion reaction is induced by the thermodynamic force within the liquid target, so that a secondary nuclear reaction is induced in the neutron absorber by a low speed neutron emitted in the nuclear fusion.

8. A chemonuclear fusion energy generating apparatus as claimed in claim 6 or 7, wherein chemonuclear fusion reaction inducing materials other than the metal lithium are mixed with said nuclear fusion materials.

9. A chemonuclear fusion energy generating apparatus as claimed in claim 6, 7 or 8, wherein a material for controlling the target temperature is mixed with said nuclear fusion materials.

# FIG. 1

## INTERNATIONAL SEARCH REPORT

| International application No. |
| --- |
| PCT/JP2005/019851 |

| A. CLASSIFICATION OF SUBJECT MATTER |
| --- |
| *G21B1/00*(2006.01) |
| According to International Patent Classification (IPC) or to both national classification and IPC |

| B. FIELDS SEARCHED |
| --- |
| Minimum documentation searched (classification system followed by classification symbols) |
| *G21B1/00*(2006.01) |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JSTPlus(JOIS), KAKUYUGO×(BUNSHIION+KURASUTA)(in Japanese)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2003-130997 A (Yoshitsugu IKEGAMI), 08 May, 2003 (08.05.03), Par. Nos. [0006], [0009], [0018]; Fig. 1 | 1-4,6-8 |
| Y | JP 6-324167 A (Naoki TAMURA), 25 November, 1994 (25.11.94), Par. No. [0029] | 1-4,6-8 |
| A | Eule, R.P. et al., Radiative Capture in The Light Heavy-ion Systems $^6Li+^6Li$ and $^6Li+^7Li$ at $E_{c.m.}$=1-8 MeV. Nuclear Physics A, 1991, Vol.529, pages 387 to 409, especially page 400. | 1 |

| ☒ Further documents are listed in the continuation of Box C. | ☒ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 17 January, 2006 (17.01.06) | 07 February, 2006 (07.02.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

International application No.

PCT/JP2005/019851

C (Continuation). DOCUMENTS CONSIDERED TO BE RELEVANT

| Category* | Citation of document, with indication, where appropriate, of the relevant passages | Relevant to claim No. |
|---|---|---|
| Y | JP 58-207000 A (Ishikawajima-Harima Heavy Industries Co., Ltd.), 02 December, 1983 (02.12.83), Page 2, upper left column, lines 17 to 18; lower left column, line 9 to 12 | 2,6 |
| Y | JP 2004-20357 A (Yoshitsugu IKEGAMI), 22 January, 2004 (22.01.04), Par. No. [0010] | 2,6 |
| Y | JP 2003-130998 A (Yoshitsugu IKEGAMI), 08 May, 2003 (08.05.03), Par. No. [0053] | 3,7 |
| Y | JP 2003-130978 A (Yoshitsugu IKEGAMI), 08 May, 2003 (08.05.03), Claim 1 | 4,8 |

Form PCT/ISA/210 (continuation of second sheet) (April 2005)

## INTERNATIONAL SEARCH REPORT
Information on patent family members

International application No.

PCT/JP2005/019851

| | | |
|---|---|---|
| JP 2003-130997 A | 2003.05.08 | (Family: none) |
| JP 6-324167 A | 1994.11.25 | DE 004024515 A |
| JP 58-207000 A | 1983.12.02 | (Family: none) |
| JP 2004-20357 A | 2004.01.22 | US 0231731 A1<br>EP 001400981 A2 |
| JP 2003-130998 A | 2003.05.08 | (Family: none) |
| JP 2003-130978 A | 2003.05.08 | (Family: none) |

Form PCT/ISA/210 (patent family annex) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003270372 A
- JP 2002207092 A
- JP 2003066176 A
- JP 2003130976 A
- JP 2003130977 A
- JP 2003282261 A
- JP 2004165107 A
- JP 2004016507 A

**Non-patent literature cited in the description**

- **IKEGAMI HIDETSUGU.** *Japanese Journal of Applied Physics,* 2001, vol. 40, 6092
- **IKEGAMI HIDETSUGU et al.** *Bulletin of Institute of Chemistry,* September 2002, http://www.inst.ke-mi.uu.se/Bulletin/Bulletinen_l.pdf
- **IKEGAMI HIDETSUGU.** *Progress of Theoretical Physics Supplement,* 2004, vol. 154, 251
- **H. ANDERSEN.** *Journal of Applied Physics,* 1974, vol. 45, 953